(19) Europäisches Patentamt

**European Patent Office**

Office européen des brevets

(11) Veröffentlichungsnummer: **0 232 398**

**B1**

(12) **EUROPÄISCHE PATENTSCHRIFT**

(45) Veröffentlichungstag der Patentschrift: **23.05.90**

(21) Anmeldenummer: **86905257.1**

(22) Anmeldetag: **05.08.86**

(86) Internationale Anmeldenummer:
**PCT/EP86/00462**

(87) Internationale Veröffentlichungsnummer:
**WO 87/00847 12.02.87 Gazette 87/04**

(51) Int. Cl.⁵: **C 08 J 7/06, C 09 D 1/00, C 08 L 27/18**

(54) **VERFAHREN ZUM MODIFIZIEREN DER OBERFLÄCHE VON POLYTETRAFLUORETHYLEN, MODIFIZIERTE FORMKÖRPER AUF DER BASIS VON POLYTETRAFLUORETHYLEN UND VERWENDUNG DERSELBEN.**

(30) Priorität: **06.08.85 DE 3528181**

(43) Veröffentlichungstag der Anmeldung:
**19.08.87 Patentblatt 87/34**

(45) Bekanntmachung des Hinweises auf die Patenterteilung:
**23.05.90 Patentblatt 90/21**

(84) Benannte Vertragsstaaten:
**AT BE CH DE FR GB IT LI LU NL SE**

(56) Entgegenhaltungen:
**GB-A-1 151 746**
**US-A-2 898 229**
**US-A-3 666 741**

**Die Akte enthält technische Angaben, die nach dem Eingang der Anmeldung eingereicht wurden und die nicht in dieser Patentschrift enthalten sind.**

(73) Patentinhaber: **ROSSBACH, Volker**
**Roonstr. 24**
**D-2000 Hamburg 20 (DE)**

(72) Erfinder: **Rossbach, Volker**
**Roonstrasse 24**
**D-2000 Hamburg 20 (DE)**
Erfinder: **Karunaratna, Mihal**
**Gustav-Wilhelm-Strasse 11**
**D-4150 Krefeld (DE)**
Erfinder: **Nottelmann, Heinz**
**Nordalbinger Weg 10**
**D-2000 Hamburg 61 (DE)**
Erfinder: **Windeln, Johannes**
**Mühlstrasse 6a**
**D-6051 Bodenheim (DE)**

(74) Vertreter: **Patentanwaltsbüro Cohausz & Florack**
**Schumannstrasse 97**
**D-4000 Düsseldorf 1 (DE)**

Courier Press, Leamington Spa, England.

EP 0 232 398 B1

**Beschreibung**

Die Erfindung betrifft ein Vefahren zum Modifizieren der Oberfläche von Polytetrafluorethylen oder von überwiegend aus Polytetrafluorethylen bestehenden Copolymerisation durch Einwirkung einer flüchtigen leicht hydrolysierbaren Verbindung auf die eine erwärmte Oberfläche der Polymeren und von Feuchtigkeit, sowie derartig modifizierte Formkörper und deren Verwendung.

Polytetrafluorethylen und dieses in überwiegender Menge enthaltende Copolymerisate werden insbesondere zur Herstellung von Formkörpern sowie als Beschichtungsmaterial, z. B. zur Beschichtung von Metallen, wegen ihrer herausragenden mechanischen und chemischen Eigenschaften verwendet. Polytetrafluorethylen verhält sich chemisch weitgehend inert und wird von den meisten organischen Lösungsmitteln nicht angegriffen. Lediglich fluorhaltige Kohlenwasserstoffe können Polytetrafluorethylen anquellen, ohne es jedoch zu zerstören. Insbesondere verändern sich nach einer Behandlungs mit Fluorkohlenwasserstoffen nicht die Adhäsions- und Benetzungseigenschaften von Polytetrafluorethylen. Abbaureaktionen treten ein, wenn elementares Fluor oder Chlortrifluorid bei höheren Temperaturen unter Druck mit Polytetrafluorethylen in Berührung kommen. Gegenüber anorganischen Fluoriden, z. B. Uranhexafluorid, ist Polytetrafluorethylen demgegenüber vollkommen beständig (vgl. Kunststoffhandbuch, "Fluorhaltige Polymerisate", Bd. 11, 4. Kapitel S. 271, Carl-Hanser Verlag, München).

Dieses chemisch inerte Verhalten erschwert außerordentlich die Modifizierung der Oberfläche von Polytetrafluorethylen. Häufig ist es jedoch erwünscht, die Oberfläche von Produkten aus Polytetrafluorethylen zu hydrophilieren und damit insbesondere ihre Benetzbarkeit durch polare Flüssigkeiten, wie z. B. Wasser zu verbessern. Häufig sollen durch die Modifizierung der Oberfläche auch die adhäsiven oder abhäsiven Eigenschaften gegenüber organischen Beschichtungen beeinflußt werden. Dies ist besonders beim Aufbau mehrschichtiger Verbundwerkstoffe von Interesse. Durch eine Hydrophilierung werden ferner die Anfärbbarkeit, das antistatische Verhalten und gewisse eleketrische Eigenschaften, wie der Oberflächenwiderstand, verbessert bzw. verändert.

Es ist zwar bekannt, auf die Oberfläche von Produkten aus Polytetrafluorethylen hydrophilierende Substanzen, wie z. B. nichtionogene Netzmittel, kationaktive Antistatika oder anionaktive Verbindungen aufzubringen. Diese haften jedoch nicht auf der Oberfläche des Polytetrafluorethylens und können deshalb angewaschen werden. Erwünscht ist aber eine permanente Modifizierung der Oberflächeneigenchaften von Produkten von Polytetrafluorethylen.

Es ist ferner bekannt, die Oberfläche von Polytrafluorethylen oxidativ durch Koronarentladungen oder durch Einwirkung von Chromschwefelsäure zu behandeln. Eine derartige Behandlung erfaßt jedoch nur die äußere Grzfläche, ist aufwendig, abwasserbelastend und kann insgesamt wenig befriedigen. Dasselbe gilt auch für die Behandlung mit Natrium in flüssigem Ammoniak oder anderen Lösungsmitteln, wobei hier als weiterer Nachteil hinzukommt, daß die Ätzung durch UV-Strahlen und Wärmeeinwirkung abgebaut wird.

In der US—PS 2 898 229 ist ein Verfahren zur Aktivierung der Oberfläche von Polymeren aus Fluorkohlenstoffen beschrieben. Bei diesem Verfahren werden die Gegenstände z. B. aus Polytrafluorethylen zunächst auf eine Oberflächentemperatur von etwa 150°C erhitzt, ohne daß die Oberfläche des Polymerisats wesentlich angegriffen wird. Die erhitzte Oberfläche wird dann mit dem Dampf einer flüchtigen und leicht hydrolysierbaren Verbindung des Siliciums, Titans oder Germaniums in Gegenwart von Feuchtigkeit in Kontakt gebracht. In dieser Patentschrift sind als Beispiele solcher flüchtiger und leicht hydrolysierbarer Verbindungen Titantetrachlorid, Germaniumtetrachlorid und Siliciumtetrachlorid sowie Tetraisopropyltitanat genannt. Vorzugsweise erfolgt die Behandlung mit dem Dampf der flüchtigen Verbindung.

In der Patenschrift wird ausgeführt, daß diese Verbindungen mit der auf der Oberfläche der Gegenstände befindlichen Luftfeuchtigkeit unter Ausbildung von Oxiden reagieren. Die behandelten Gegenstände verlieren ihre übliche Schlüpfrigkeit. Haftkleber haften auf der behandelten Oberfläche im Gegensatz zur unbehandelten Oberfläche. Die Haftung von Epoxyharzen auf der Oberfläche ist in gleicher Weise verbessert. Ein weiteres Verfahren zur Oberflächenbehandlung von Polytetrafluorethylen ist aus der US—PS 3 666 741 bekannt. Bei diesem Verfahren wird der aus einem Fluorkohlenstoffpolymeren bestehende Gegenstand in ein flüssiges Metallfluorid, welches aus der Gruppe von Rheniumhexafluorid und Molybdänhexafluorid ausgewählt ist, eingetaucht. Dieses Eintauchen wird so lange vorgenommen, bis die gewünschte Penetration erzielt ist. Anschließend wird das Rheniumhexafluorid bzw. Molybdänhexafluorid hydrolisiert. Dabei entstehen dunkel gefärbte, elektrisch leitende überzüge. Schließlich ist aus der US—PS 3 122 445 ein Verfahren zur Behandlung von geformten Gegenständen aus Fluorkohlenstoffpolymeren bekannt. Bei diesem Verfahren werden die Gegenstände mit Bortrifluorid und Sauerstoff behandelt, um die Oberflächeneigenschaften des Polymer zu verändern. Hierbei handelt es sich aber um einen Oxidationsvorgang. Die Behandlung von reinen Polytetrafluorethylenpolymeren ist ausgeschlossen.

Mit der Verfahren des Standes der Technik ist es zwar möglich, die Oberfläche, von Formkörpern aus Polytetrafluorethylen so zu modifizieren, daß deren Benetzbarkeit verbessert wird. Es hat sich jedoch herasugestellt, daß bei den bekannten Verfahren nur eine sehr oberflächennahe dünne Schicht des Gegenstandes beeinflußt wird, so daß die Permanenz der Eigenschäften, die durch die Modifizierung hervorgerufen oder variiert werden, unzureichend ist.

Der Erfindung liegt deshalb die Aufgabe zugrunde, ein Verfahren aufzufinden, welches es gestattet, die Oberflächen von Gegenständen aus Polytetrafluorethylen oder von überwiegend aus Polytetrafluorethylen bestehenden Copolymerisaten so zu modifizieren, daß nicht nur oberflächennahe Bereiche der Formkörper erfaßt werden, sondern die Modifizierung der Formkörper in tiefere Bereiche erfolgt, als dies bischer möglich war. Durch die Erfindung wird insbesondere die Permanenz der erzielten Effekte verbesset. Die modifizierte Oberfläche ist im wesentlichen frei von störenden Farbveränderungen.

Mit der Erfindung wird ein modifizierter Formkörper auf der Basis von Polytetrafluorethylen oder einem Copolymerisat desselben geschaffen, der in seiner an die Oberfläche angrenzenden Schicht Kieselsäure nach Art eines pseudo-interpenetrierenden Polymernetzwerkes gebunden hat.

Diese Aufgabe wird erfindungsgemäß durch den Gegenstand des hauptanspruchs gelöst. Bevorzugte Weiterbildungen sind in den Unteransprüchen beschrieben.

Überraschenderweise gelingt diese gewünschte Modifizierung dadurch, daß man als flüchtige, leicht hydrolysierbare Verbindungen die Fluoride des Siliciums, Germaniums, Phosphors oder Arsens verwendet. Wie bei dem bekannten Verfahren läßt man die Fluoride auf die aus Fluorkohlenstoffpolymeren bestehenden Gegenstände bei Temperaturen von mindestens 150°C einwirken. Vorzugsweise wählt man als Einwirkungstemperatur jedoch eine Temperatur im Bereich von 250°—300°C. Die Dauer der Einwirkung ist von der Temperatur der Oberfläche, bei der die Einwirkung stattfindet, abhängig. Je höher die Oberflächentemperatur gewählt wird, um so kürzer kann die Einwirkungszeit sein. Die Einwirkung erfolgt insbesondere während einer Einwirkungszeit von wenigen Minuten bis zu etwa 2—3 Stunden.

Eine bevorzugte Durchführung des erfindungsgemäßen Verfahrens ist dadurch gekennzeichnet, daß man als Fluoride Siliciumtetrafluorid oder die Fluoride der höchsten Wertigkeitsstufe der Elemente Germanium, Phosphor oder Arsen verwendet. Es sind dies Germaniumtetrafluorid, Phosphorpentafluorid oder Arsenpentafluorid. Siliciumtetrafluorid ist jedoch von diesen Fluoriden besonders bevorzugt, da es am leichtesten in die Struktur der Formkörper aus Polytetrafluorethylen eindringt und mit dem Wasserdampf bzw. flüssigem Wässer zu Kieselsäure hydrolisiert, welche ein polymeres Netzwerk ausbildet, welches in dem Polytetrafluorethylen-Formkörper in besonderer Weise haftet.

Die Einwirkung des Wassers oder des Wasserdampfes auf die mit den Fluoriden des Siliciums, Germaniums, Phosphors oder Arsens behandelten Oberflächen kann entweder in einer Stufe, d. h. zusammen mit der Beaufschlagung mit den Fluoriden erfolgen. Die Behandlung mit Wasser oder Wasserdampf kann aber auch im Anschluß an die Oberflächenbehandlung der Formkörper mit den Fluoriden erfolgen. Eine bevorzugte Ausführung des erfindungsgemäßen Verfahrens besteht deshalb darin, daß man in einer ersten Verfahrensstufe die Fluoride des Siliciums, Germaniums, Phosphors oder Arsens auf die Oberfläche des Polymeren einwirken läßt und das so behandelte Polymerisat der Einwirkung von Wasser oder Wasserdampf aussetzt. Es hat sich dabei als besonders zweckmäßig erwiesen, das behandelte Polymere mit kaltem Wasser, insbesondere mit Wasser einer Temperatur unterhalb 10°C, zu behandeln. Durch Verwendung von gekühlten Salzlösungen ist es möglich, die Behandlungstemperatur auf Werte unter den Gefrierpunkt des Wassers zu legen. Hierdurch wird eine besonders gute Verankerung des sich bildenden Netzwerkes aus Kieselsäure in den Formkörper erreicht.

Das Polytetrafluoroethylen bzw. dessen Copolymerisate kann bzw. können in Form von Pulvern, Granulaten, Folien, Fasern, flächigen Geweben oder Gewirken oder als Formkörper, z. B. als Zahnrad, Scheibe, Gleitkörper vorliegen.

Copolymerisate im Sinne vorliegender Erfindungen sind solche mit bis zu 50 Gew. % einpolymerisierten Monomeren aus der Gruppe Hexafluorpropylen, Chlortrifluorethylen, perfluorierte Vinylether, Vinylidenfluorid, Vinylfluorid, Ethylene und/oder propylen. Besonders bevorzugt sind Copolymerisate mit bis zu 30 Gew. % der vorgenannten Monomeren.

Es ist zu vermuten, daß die Fluoride des Si, Ge, P und As bei der vorgegebenen Temperatur in die oberfläche Grenzschicht des Polytetrafluorethylens eindringen und ähnlich fluorhaltigen Kohlenwasserstoffen das Polytetrafluorethylen und dessen Copolymerisierte anquellen. Unter Einwirkung des Wasserdampfes hydrolisieren die Fluoride unter Ausbildung von Hydroxylgruppen. Dabei zeigt insbesondere die bei der Hydrolyse von SiF4 sich bildende Kieselsäure die bekannte Eigenschaft der durch den freigesetzten Fluorwasserstoff katalysierten Molekülvergrößerung durch Kondensation. Hierbei bildet sich vermutlich in der Matrix der Oberflächenschicht des aufgequollenen Polytetrafluorethylens ein polymeres, physikalisch verankertes Neztwerk von Polykieselsäure, welches fest am und im Polymerisat haftet. Sowohl die Eigenschaften des erfindungsgemäß behandelten Polytetrafluorethylens bzw. seiner Copolymerisate wie auch physikalische Untersuchungen, z. B. mittels der ESCA-Analyse, lassen es wahrscheinlich erscheinen, daß die Kieselsäure nach Art eines pseudo-inpenetrierenden Polymernetzwerkes gebunden ist.

Die Vefahrensprodukte sind durch den Einbau der Hydrolyse- und ggf. Kondensationsprodukte der Fluoride in der gewünschten Weise modifiziert, insbesondere hydrophiliert. Dabei sind u. a. bei den erfindungsgemäß erhaltenen Produkten folgende Eigenschaften zu beobachten: Bringt man einzelne Fasern, kleine Abschnitte einer Folie oder Pulver aus unbehandeltem Polytetrafluorethylene auf tensidhaltiges Wasser, so verbleiben diese Materialien auf der Oberfläche. Die entsprechenden, erfindungsgemäß behandelten hydrophilierten Proben werden demgegenüber augenblicklich benetzt und sinken zu Boden.

Erfindungsgemäß behandelte dünne Folien werden dabei transparent.

Behandelt man unmodifiziertes Polytetrafluorethylen mit Dispersionsfarbstoffen (z. B. Foronmarineblau S-2 G1) unter Bedingungen, wie sie für den Nachweise von Strukturunerschieden bei Polyesterfaser verwendet werden (vgl. B. von Falkai, Synthesefasern, Verlag Chemie, Weinheim 1982, S. 418), so werden sie oberflächlich angefärbt. Die entsprechenden hydrophilierten Proben nehmen demgegenüber kaum Dispersionsfarbstoff auf.

Das erfindungsgemäße Verfahren ist gegenüber dem Verfahren der US—PS 2 898 292 u. a. deshalb besonders vorteilhaft, als die bei vorliegender Erfindung ausgewählten Fluoride des Siliciums, Germaniums, Phosphors oder Arsens wesentlich tiefer in die Oberflächenschicht des zu modifizierenden Formkörpers aus Polytetrafluorethylen eindringen. Siliciumtetrachlorid oder Germaniumtetrachlorid zeigt eine unbefriedigende Eindringtiefe. Die durch Eindringen von Wasser entstehenden Hydrolyseprodukte sind im wesentlichen auf der äußeren Oberfläche gebunden und können deshalb durch mechanische Einwirkung leicht entfernt werden. Im Gegensatz dazu dringen die Fluoride des Siliciums, Germaniums, Phosphors oder Arsens wesentlich tiefer in die zu modifizierenden Formkörper ein. Bei der Hydrolyse verankert sich das entstehende polymere Netzwerk der Hydrolyseprodukte besonders wirkungsvoll in der Matrix des Formkörpers und ist deshalb mechanisch wesentlich widerstandsfähiger. Diese höhere Eindringtiefe läßt sich in einfacher Weise dadurch zeigen, daß man von einem erfindungsgemäß behandelten Formkörper mit einem Mikrotom nach und nach Schichten von der Oberfläche abträgt und die Benetzbarkeit der verbleibenden Oberfläche durch Tinten vorgegebener Oberflächenspannung prüft. Es zeigt sich, daß erfindungsgemäß behandelte Formkörper wesentlich höher penetriert sind, als die nach dem Stand der Technik, insbesondere nach dem Verfahren der US—PS 2 898 229 behandelten Formkörper.

Bei der Prüfung der Oberfläche von nach dem erfindungsgemäßen Verfahren behandelten Formkörpern kann man durch spektroskopische Analysemethoden feststellen, daß auf der Oberfläche Silicium- und Saurestoffatome angeordnet sind. Modifiziert man mit dem erfindungsgemäßen Verfahren Formkörper aus Polytetrafluorethylen, welche eine Porenstruktur aufweisen, läßt sich durch rasterelektronenmikroskopische Aufnahmen nachweisen, daß die porige Struktur der behandelten Formkörper erhalten bleibt. Es tritt kein Verschluß der Poren durch bei der Hydrolyse gebildete Kieselsäure auf. Setzt man nach dem erfindungsgemäßen Verfahren erhaltene Produkte dem Angriff von heißem Wasser aus, stellt man fest, daß die Eigenschaften der modifizierten Formkörper trotz der Heißwasserbehandlung erhalten bleiben, d. h., daß die Permanenz der erzielten Effekts hoch ist. Die durch die Hydrolyse erzeugten polymeren Säuren sind somit nicht nur physikalisch in den Gegenstand inkorporiert, sondern auch an die innere und äußere Oberfläche des Gegenstandes gebunden.

Für die erfindungsgemäß erhaltenen Produkte bieten sich deshalb bevorzugt folgende Einsatzzwecke an: Erfindungsgemäß modifzierte Formkörper können aufgrund ihrer selbstschmierenden Eigenschaften als mechanische Konstruktionselemente, z. B. in Kleinmotoren, aber auch zur Herstellung von selbsschmierenden Verschlußvorrichtungen verwendet werden. Die Schmiereigenschaften bleiben auch im Hochvakuum erhalten. Unsymmetrische Membranen können aus einseitig hydrophilierten Folien gewonnen werden. Die Verfahrensprodukte in Form von Faser können zu Geweben mit hydrophiler Oberfläche, z. B. für Filtertücher, verarbeitet werdne. Die Verfahrensprodukte können aufgrund ihrer an der Oberfläche befindlichen reaktiven Hydroxylgruppen weiterer Modifizierungsreaktionen unterworfen werden.

Die Oberflächen behandelter Formkörper oder Folien können in einfacher Weise mit Hilfe üblicher Kleber mit organischen Kunstharzen, z. B. unter Ausbildung von Laminatstrukturen, verklebt werden. Besonders geeignet sind Kleber auf Isocyanatbasis, welche in Wechselwirkung mit dem auf den Oberflächen der erfindungsgemäß behandelten Polymerisate befindlichen Hydroxylgruppen treten können.

In den nachfolgenden Beispielen werden das erfindungsgemäße Verfahren sowie die Eigenschaften der verfahrensgemäß hergestellten Produkte näher erläutert.

Beispiel 1

Ein V4A-Stahlzylinder (Durchmesser am Boden 30 cm, Durchmesser an der oberen öffnung: 10 cm, Höhe: 50 cm) ist an der oberen öffnung mit Klemmbacken versehen, in die ein zylindrisches Polytetrafluorethylen-Werkstück eingespannt werden kann.

Auf dem Boden des Zylinders befindet sich ein Gemisch von gepulvertem Flußspat und Quarzsand, auf das aus einer Dosiereinrichtung konzentrierte Schwefelsäure aufgetropft wird. Durch ein Inlet läßt sich Wasserdampf in den Zylinder einblasen.

Die Schwefelsäure wird so dosiert, daß die Flächenbelastung durch das anströmende Gas zwischen 5 und 500 m/m² h beträgt. Die Temperatur des Werkstückes wird während der Behandlung mit Siliciumtetrafluorid bei 250°—260° C gehalten. Für die anschließende Beaufschlagung von Wasserdampf wird das Werkstück auf eine Temperatur von —10° C bis 0° C gekühlt. Wenn Siliciumtetrafluorid und Wasserdampf gemeinsam verwendet werden, wird der Wassergehalt im Gasraum auf Werte zwischen 6 und 600 g/m eingestellt. Als Flächenbelastung wird wiederum ein Wert zwischen 5 und 500 m/m² gewählt. Die Einwirkungszeiten von SiF4 und/oder Wasser können zwischen einigen Minuten und mehreren Stunden variieren.

Wie die ESCA-Analyse zeigt, befinden sich auf der Oberfläche eines so behandelten Werkstückes Silicium- und Sauerstoff-Atome.

Man bestreicht mit handelsüblichen PE-Testtinten abgestufter Oberflächenspannung, wie sie zur Ermittlung des Vorbehandlungsgrades von Folienoberflächen verwendet werden (Hersteller z. B. Druckfarbenfabrik Gebr. Schmidt GmbH, 6000 Frankfurt 96). Für sämtliche Testtinten im Bereich von 30 bis 50 nN/m erhält man beim behandelten Material einen geschlossenen Film.

Ein Tropfen einer wäßrigen Tensidlösung (1% eines Netzmittels auf Basis sulfonsaurem Natriums) spreitet augenblicklich auf der Oberfläche.

Von dem Werkstück werden Folien abgeschält, deren Dicke zwischen 0,02 mm und 1 mm variiert.

Die oben beschriebenen Versuche (ESCA-Analyse, Bestreichen mit PE-Testtinten, Benetzen mit wäßriger Tensidlösung) werden an diesen Folien mit dem gleichen Ergebnis wiederholt.

Die Folien werden, wie in B. von Falkai, Synthesefasern, Verlag Chemie, Weinheim 1981, S. 418 beschrieben, mit einem im Handel unter der Bezeichnung Foronmarineblau S-2 G1 erhältlichen Dispersionsfarbstoff abgefärbt. Hierbei färben sich die unbehandelten Folien deutlich tiefer als die behandelten. Beim kochenden Seifen mit einem anionischen Waschmittel verlieren die behandelten Folien ihren Farbstoff wieder vollständig: bei den unbehandelten Folien verbleibt der Farbstoff demgegenüber zum größeren Teil.

Ein Stückchen Folie von der Fläche 1 cm² wird auf eine Tensidlösung (1% eines Netzmittels auf Basis von sulfonsaurem Natrium) gelegt. Während die unbehandelten Polytetrafluorethylen-Proben auf der Oberfläche verbleiben, tauchen die erfindungsgemäß behandelten Proben infolge ihrer guten Benetzung sofort unter.

Eine weiße, poröse Folie (Porenvolumen 40%, Dicke; 0,25 mm) wird in eine wäßrige Tensidlösung (1% eines handelsüblichen Spülmittels) getaucht. Sofort nach dem Eintauchen wird die Folie transparent.

Erfindungsgemäß behandelte und unbehandelte Polytetrafluorethylen-Proben weisen nach Aufheizen über die Schmelztemperatur und Abkühlen auf Raumtemperatur beim erneuten Aufheizen identische DSC-Spektren auf.

Von den Folien der behandelten und unbehandelten Proben werden Höchstzufkraft und Höchstkraftdehnung bestimmt. Während die Höchstzugkraftdehnung beim erfindungsgemäß behandelten Material auf ca. 60% (relativ) des unbehandelten Materials zurückgehen kann, beträgt die Höchstzugkraft nach einer Behandlung noch mindestens 80% des Ausgangsmaterials.

Beispiel 2

In die Klemmbacken des in Beispiel 1 beschriebenen Stahlzylinders werden Folien mit einer Dicke zwischen 0,02 und 1 mm eingespannt, die verstreckt bzw. unverstreckt sind. Anschließend werden die Folien wie in Beispiel 1 beschrieben behandelt. Die Folien weisen Eigenschaften auf, wie sie in Beispiel 1 beschrieben sind.

Beispiel 3

In dem in Beispiel 1 beschriebenen Stahlzylinder werden die Klemmbacken gegen eine feinmaschige Stahlgaze ausgetauscht. Auf diese Gaze wird Fasermaterial der verschiedensten Aufmachungsformen (Flocke, Endlosfasern, Spinnfaser- und Filamentgarne, Gewebe, Filz) aufgelegt. Sofern notwendig, wird das Material von der Gegenseite durch eine zweite Stahlgaze zusammengedrückt. Anschließend werden die Materialien wie in Beispiel 1 beschrieben behandelt. Die Fasermaterialien weisen nach der Behandlung Eigenschaften auf, wie sie in Beispiel 1 für die Folien beschrieben sind.

Beispiel 4

In die Öffnung des in Beispiel 1 beschriebenen Stahlzylinders wird eine Nutsche aus V4A-Stahl eingesetzt (Durchmesser: 9,5 cm, Höhe: 5 cm, perforierter Anteil: 20%), die 1,5 cm hoch mit Polytetrafluorethylen-Pulver gefüllt wird. Anschließend wird das Pulver analog Beispiel 1 mit Siliciumtetrafluorid behandelt. Die Pulver weisen nach der Behandlung Eigenschaften auf, wie sie im Beispiel 1 beschrieben werden.

Beispiel 5

Es werden die in den Beispielen 1 bis 4 beschriebenen Versuche wiederholt. Jedoch wird anstelle Siliciumtetrafluorids gasförmiges Germaniumtetrafluorid, Phosphorpentafluorid bzw. Arsenpentafluorid verwendet. Die Gase werden aus einem Druckbehälter direkt in den Stahlzylinder injiziert. Ansonsten werden die Bedingungen (Temperatur an der Anströmseite der Formkörper, Flächenbelastung durch das anströmende Gas), wie in den Beispielen 1—4 beschrieben gewählt. Die eingetretene Modifizierung 1—4 beschrieben gewählt. Die eingetretene Modifizierung der Polymerisatoberfläche wird auf dem gleichen Wege nachgewiesen, wie in den Beispielen 1—4. Alle Proben zeigen eine polare, hydrophilierte Oberfläche. Sie sind durch polare Flüssigkeiten wie Wasser oder Alkohol leicht benetzbar.

Beispiel 6

In einen V 4A-Autoklav (Volumen 1,7 l) wird ein Werkstück eingebracht. Durch Einblasen von Siliciumtetrafluorid wird im Autoklaven ein Druck von 1 atü erzeugt. Anschließend wird der Autoklav auf 250°C gebracht, wobei der Druck auf 2,2 bis 2,4 atü ansteigt. Nach einigen Stunden Behandlungsdauer wird der Autoklav mit Eis/Kochsalzlösung rasch auf 0°C abgekühlt. In den gekühlten Autoklaven wird sodann Eis/Kochsalzlösung einer Temperatur von −15°C von unten eingepreßt und zwischen 1 min und 1 h einwirken gelassen.

Die in Beispiel 1 beschriebenen Versuche werden mit dem gleichen Ergebnis wiederholt.

**Patentansprüche für die Vertragsstaaten: BE, CH, DE, FR, GB, IT, LU, NL, SE**

1. Verfahren zum Modifizieren der Oberfläche von Polytetrafluorethylen oder von überwiegend aus Polytetrafluorethylen bestehenden Copolymerisaten durch Einwirkung einer flüchtigen, leicht hydrolysierbaren Verbindung auf die erwärmte Oberfläche des Polymeren und von Feuchtigkeit, dadurch gekennzeichnet, daß als flüchtige, leicht hydrolsierbare Verbindungen die Fluoride des Siliciums, Germaniums, Phosphors und/oder Arsens verwendet werden.

2. Verfahren nach Anspruch 1, dadurch gekennzeichnet, daß als Fluoride SiF4 oder die der höchsten Wertigkeitsstufe der Elemente Germanium, Phosphor oder Arsen verwendet werden.

3. Verfahren nach Anspruch 1 oder 2, dadurch gekennzeichnet, daß man in einer ersten Verfahrensstufe die Fluoride des Siliciums, Germaniums, Phosphors und/oder Arsens auf die Oberfläche des Polymeren einwirken läßt und das so behandelte Polymere in einer zweiten Verfahrensstufe der Einwirkung von Wasser oder Wasserdampf aussetzt.

4. Verfahren nach Anspruch 3, dadurch gekennzeichnet, daß das behandelte Polymere mit Wasser von unter 10°C behandelt wird.

5. Verfahren nach einem der Ansprüche 1 bis 3, dadurch gekennzeichnet, daß man in einer ersten Verfahrensstufe die Fluoride des Siliciums, Germaniums, Phosphors und/oder Arsens auf die Oberfläche des Polymeren einwirken läßt und das so behandelte Polymere durch gekühlte Salzlösungen behandelt, die bevorzugt unter dem Gefrierpunkt des Wassers abgekült sind.

6. Verfahren nach Anspruch 2, dadurch gekennzeichnet, daß die Einwirkung der Fluoride des Siliciums, Germaniums, Phosphors und/oder Arsens zusammen mit der Einwirkung von Wasser oder Wasserdampf durchgeführt wird.

7. Verfahren nach einem der vorstehenden Ansprüche, dadurch gekennzeichnet, daß das Polymere bei der Einwirkung der genannten Fluoride auf eine Temperatur von mindestens 150°C, vorzugsweise von 250—300°C erhitzt wird.

8. Modifizierter Formkörper auf der Basis von Polytetrafluorethylen oder einem Copolymerisat desselben, dadurch gekennzeichnet, daß in seiner an die Oberfläche angrenzenden Schicht Kieselsäure nach Art eines pseudo-interpenetrierenden Polymernetzwerkes gebunden ist.

9. Verwendung der nach dem Verfahren der Ansprüche 1 bis 7 modifizierten Formkörper als selbstschmierende Konstuktionselemente.

10. Verwendung vom nach dem Verfarehn der Ansprüche 1 bis 7 einseitig modifizierten Folien als asymmetrische Membranen.

11. Verwendung von nach dem Verfahren der Ansprüche 1 bis 7 einseitig modifizierten Fasern zur Herstellung von Fließen und Geweben mit hydrophiler Oberfläche.

**Patentansprüche für den Vertragsstaat: AT**

1. Verfahren zum Modifizieren der Oberfläche von Polytetrafluorethylen oder von überwiegend aus Polytetrafluorethylen bestehenden Copolymerisaten durch Einwirkung einer flüchtigen, leicht hydrolysierbaren Verbindung auf die erwärmte Oberfläche des Polymeren und von Feuchtigkeit, dadurch gekennzeichnet, daß als flüchtige, leicht hydrolysierbare Verbindungen die Fluoride des Siliciums, Germaniums, Phosphors und/oder Arsens verwendet werden.

2. Verfahren nach Anspruch 1, dadurch gekennzeichnet, daß als Fluoride SiF4 oder die der höchsten Wertigkeitsstufe der Elemente Germanium, Phosphor oder Arsen verwendet werden.

3. Verfahren nach Anspruch 1 oder 2, dadurch gekennzeichnet, daß man in einer ersten Verfahrensstufe die Fluoride des Siliciums, Germaniums, Phosphors und/oder Arsens auf die Oberfläche des Polymeren einwirken läßt und das so behandelte Polymere in einer zweiten Verfahrensstufe der Einwirkung von Wasser oder Wasserdampf aussetzt.

4. Verfahren nach Anspruch 3, dadurch gekennzeichnet, daß das behandelte Polymere mit Wasser von unter 10°C behandelt wird.

5. Verfahren nach einem der Ansprüche 1 bis 3, dadurch gekennzeichnet, daß man in einer ersten Verfahrensstufe die Fluoride des Siliciums, Germaniums, Phosphors und/oder Arsens auf die Oberfläche des Polymeren einwirken läßt und das so behandelte Polymere durch gekühlte Salzlösungen behandelt, die bevorzugt unter dem Gefrierpunkt des Wassers abgekühlt sind.

6. Verfahren nach Anspruch 2, dadurch gekennzeichnet, daß die Einwirkung der Fluoride des Siliciums, Germaniums, Phosphors und/oder Arsens zusammen mit der Einwirkung von Wasser oder Wasserdampf durchgeführt wird.

7. Verfahren nach einem der vorstehenden Ansprüche, dadurch gekennzeichnet, daß das Polymere bei der Einwirkung der genannten Fluoride auf eine Temperatur von mindestens 150°C, vorzugsweise von 250—300°C erhitzt wird.

8. Verwendung der nach dem Verfahren der Ansprüche 1 bis 7 modifizierten Formkörper als seblstschmierende Konstruktionselemente.

9. Verwendung von nach dem Verfahren der Ansprüche 1 bis 7 einseitig modifizierten Folien als asymmetrische Membranen.

10. Verwendung von nach dem Verfahren der Ansprüche 1 bis 7 einseitig modifizierten Fasern zur Herstellung von Fließen und Geweben mit hydrophiler Oberfläche.

**Revendications pour les Etats Contractants: BE, CH, DE, FR, GB, IT, LI, LU, NL, SE**

1. Procédé de modification de la surface de polytétrafluoroéthylène ou de copolymères constitués en majorité de polytétrafluoroéthylène, par action d'un composé volatil facilement hydrolysable sur la surface chauffée du polymère, et de l'humidité, caractérisé en ce que, on utilise comme composés volatils facilement hydrolysables les fluorures de silicium, germanium et/ou arsenic.

2. Procédé selon la revendication 1, caractérisé en ce qu'on utilise comme fluorures SiF₄ et les fluorures au niveau de valence le plus élevé des éléments germanium, phosphore et arsenic.

3. Procédé selon la revendication 1 ou 2, caractérisé en ce que, dans une première étape du procédé, on fait agir les fluorures de silicium, germanium, phosphore et/ou arsenic sur la surface du polymère et qu'on expose, dans une deuxième étape du procédé le polymère ainsi traité à l'action de l'eau ou de la vapeur d'eau.

4. Procédé selon la revendication 3, caractérisé en ce que le polymère traité est traité avec de l'eau en dessous de 10°C.

5. Procédé selon l'une des revendications 1 à 3, caractérisé en ce que, dans une première étape du procédé, on fait agir les fluorures de silicium, germanium, phosphore et/ou arsenic sur la surface du polymère et qu'on traite le polymère ainsi traité, par des solutions salines refroidies qui sont de préférence refroidies en dessous du point de congélation de l'eau.

6. Procédé selon la revendication 2, caractérisé en ce qu'on réalise simultanément la réaction des fluorures de silicium, germanium, phosphore et/ou arsenic, et la réaction avec l'eau ou la vapeur d'eau.

7. Procédé selon l'une des revendications précédentes, caractérisé en ce qu'on chauffe à une température d'au moins 150°C, de préférence de 250—300°C le polymère soumis à l'action des fluorures cités.

8. Corps moulé modifié à base de polytétrafluoroéthylène ou d'un de ses copolymères, caractérisé en ce que dans la couche contiguë à la surface, de la silice est liée sous forme d'un réseau polymère pseudo-interpénétré.

9. Utilisation selon la procédé des revendications 1 à 7 de corps moulés modifiés en tant que pièces de construction autolubrifiantes.

10. Utilisation selon le procédé des revendications 1 à 7 de films modifiés comme membranes asymétriques.

11. Utilisation selon le procédé des revendications 1 à 7 de fibres modifiées sur une face pour réaliser des non-tissés et des tissus à surface hydrophile.

**Revendications pour l'Etat Contractant: AT**

1. Procédé de modification de la surface de polytétrafluoroéthylène ou de copolymères constitués en majorité de polytétrafluoroéthylène, par action d'un composé volatil facilement hydrolysable sur la surface chauffée du polymère, et de l'humidité, caractérisé en ce que, on utilise comme composés volatils facilement hydrolysables les fluorures de silicium, germanium et/ou arsenic.

2. Procédé selon la revendication 1, caractérisé en ce qu'on utilise comme fluorures SiF₄ et les fluorures au niveau de valence le plus élevé des éléments germanium, phosphore et arsenic.

3. Procédé selon la revendication 1 ou 2, caractérisé en ce que, dans une première étape du procédé, on fait agir les fluorures de silicium, germanium, phosphore et/ou arsenic sur la surface du polymère et qu'on exposé, dans une deuxième étape du procédé le polymère ainsi traité à l'action de l'eau ou de la vapeur d'eau.

4. Procédé selon la revendication 3, caractérisé en ce que le polymère traité est traité avec de l'eau en dessous de 10°C.

5. Procédé selon l'une des revendications 1 à 3, caractérisé en ce que, dans une première étape du procédé, on fait agir les fluorures de silicium, germanium, phosphore et/ou arsenic sur la surface du polymère et qu'on traite le polymère ainsi traité, par des solutions salines refroidies qui sont de préférence refroidies en dessous du point de congélation de l'eau.

6. Procédé selon la revendication 2, caractérisé en ce qu'on réalise simultanément la réaction des fluorures de silicium, germanium, phosphore et/ou arsenic, et la réaction avec l'eau ou la vapeur d'eau.

7. Procédé selon l'une des revendications précédentes, caractérisé en ce qu'on chauffe à une température d'au moins 150°C, de préférence de 250—300°C le polymère soumis à l'action des fluorures cités.

8. Utilisation selon le procédé des revendications 1 à 7 de corps moulés modifiés en tant que pièces de construction autolubrifiantes.

9. Utilisation selon le procédé des revendications 1 à 7 de films modifiés comme membranes asymétriques.

10. Utilisation selon le procédé des revendications 1 à 7 de fibres modifiés sur une face pour réaliser des non-tissés et des tissus à surface hydrophile.

**Claims for the Contracting States: BE, CH, DE, FR, GB, IT, LI, LU, NL, SE**

1. A method for the modification of the surface of polytetrafluoroethylene or of copolymers consisting mainly of polytetrafluoroethylene by the action of a volatile and easily hydrolyzable compound on the heated surface of the polymer and of moisture, characterized in that fluorides of silicon, germanium, phosphorus and/or arsenic are used as the volatile, easily hydrolyzable compounds.

2. A method in accordance with claim 1, characterized in that as fluorides SiF4 or those of the highest valence stage of the elements germanium, phosphorus or arsenic are used.

3. A method in accordance with claims 1 or 2, characterized in that in a first method step the flourides of silicon, germanium, phosphorus and/or arsenic are permitted to act on the surface of the polymer and in that the polymers thus treated are exposed to the action of water or steam in a second method step.

4. A method in accordance with claim 3, characterized in that the treated polymer is treated with water of a temperature below 10°C.

5. A method in accordance with one of claims 1 to 3, characterized in that in a first method step the fluorides of silicon, germanium, phosphorus and/or arsenic are permitted to act on the surface of the polymer and in that the polymer thus treated is treated by cooled saline solutions which are preferably cooled below the freezing point of water.

6. A method in accordance with claim 2, characterized in that the action of the fluorides of silicon, germanium, phosphorus and/or arsenic takes place together with the action of the water or steam.

7. A method in accordance with one of the preceding claims, characterized in that the polymer is heated to a temperature of at least 150°C, preferably of 250 to 300°C while the said fluorides act on it.

8. A modified molded element on the basis of polyfluoroethylene or of a copolymer of the same, characterized in that silicic acid in the form of a pseudointerpenetrating polymer network is bonded to its layer adjacent to the surface.

9. Use of the molded elements modified in accordance with the method of claims 1 to 7 as self-lubricating structural elements.

10. Use of the foils unilaterally modified in accordance with the method of claims 1 to 7 as asymmetric membranes.

11. Use of fibers unilaterally modified in accordance with the method of claims 1 to 7 for the manufacture of fleeces and fabrics with a hydrophilic surface.

**Claims for Contracting State: AT**

1. A method for the modification of the surface of polytetrafluoroethylene or of copolymers consisting mainly of polytetrafluoroethylene by the action of a volatile and easily hydrolyzable compound on the heated surface of the polymer and of moisture, characterized in that fluorides of silicon, germanium, phosphorus and/or arsenic are used as the volatile, easily hydrolyzable compounds.

2. A method in accordance with claim 1, characterized in that as fluorides SiF4 or those of the highest valence stage of the elements germanium, phosphorus or arsenic are used.

3. A method in accordance with claims 1 or 2, characterized in that a first method step the fluorides of silicon, germanium, phosphorus and/or arsenic are permitted to act on the surface of the polymer and in that the polymers thus treated are exposed to the action of water or steam in a second method step.

4. A method in accordance with claim 3, characterized in that the treated polymer is treated with water of a temperature below 10°C.

5. A method in accordance with one of claims 1 to 3, characterized in that in a first method step the fluorides of silicon, germanium, phosphorus and/or arsenic are permitted to act on the surface of the polymer and in that the polymer thus treated is treated by cooled saline solutions which are preferably cooled below the freezing point of water.

6. A method in accordance with claim 2, characterized in that the action of the fluorides of silicon, germanium, phosphorus and/or arsenic takes place together with the action of the water or steam.

7. A method in accordance with one of the predetermining claims, characterized in that the polymer is heated to a temperature of at least 150°C, preferably of 250 to 300°C while the said fluorides act on it.

8. Use of the molded elements modified in accordance with the method of claims 1 to 7 as self-lubricating structural elements.

9. Use of the foils unilaterally modified in accordance with the method of claims 1 to 7 as asymmetric membranes.

10. Use of fibers unilaterally modified in accordance with the method of claims 1 to 7 for the manufacture of fleeces and fabrics with a hydrophilic surface.